# EUROPEAN PATENT SPECIFICATION

(11) **EP 1 496 619 B1**
(45) Date of publication and mention of the grant of the patent: **29.11.2006**
(21) Application number: 04015396.7
(22) Date of filing: 30.06.2004
(51) Int. Cl.: H04B 1/38

(54) **Radio frequency receiving apparatus and method of mobile communication terminal**
RF Verfahren und Empfänger eines Mobilfunk-Endgerätes
Récepteur RF et procédé d'un terminal de communication mobile

(30) Priority: 09.07.2003 KR 2003046447
(43) Date of publication of application: 12.01.2005
(73) Proprietor: LG ELECTRONICS INC., Seoul (KR)
(72) Inventor: Han, Jeong-Seok, Seongdong-Gu Seoul (KR)
(74) Representative: Katérle, Axel

(56) References cited:
- EP-A- 1 152 254
- US-A- 6 097 974
- US-A1- 2003 100 333

## Description

### BACKGROUND OF THE INVENTION

### 1. Field of the Invention

The present invention relates to an RF (Radio Frequency) receiving apparatus and method of a mobile communication terminal capable of performing both GPS (Global Positioning System) function and CDMA (Code Division Multiple Access) function.

### 2. Description of the Related Art

A position tracking service is a service for automatically checking and tracking a position of a mobile communication terminal on a real time basis by using propagation detecting characteristics through a base station of a CDMA-based mobile communication network. In the CDMA network, the position tracking service is made such that a position of the mobile communication terminal is detected and tracked by using a GPS and a mobile communication network.

E911 (Emergency 911) service is one of the position tracking services of the CDMA network, through which a position of a mobile communication terminal which is available for receiving a GPS signal is checked and an emergency rescue agency, such as a fire station, is informed the checked position of the mobile communication terminal.

In order to provide the E911 service, the mobile communication terminal includes an antenna and a GPS receiver available for receiving the GPS signal, and a position determination entity (PDE) calculates a position of the mobile communication terminal by using information received by the GPS receiver of the mobile communication terminal.

In case of an RF receiver of a mobile communication terminal performing both the GPS function and the CDMA function, it has a GPS path for a GPS RF signal and a CDMA path for a CDMA RF signal.

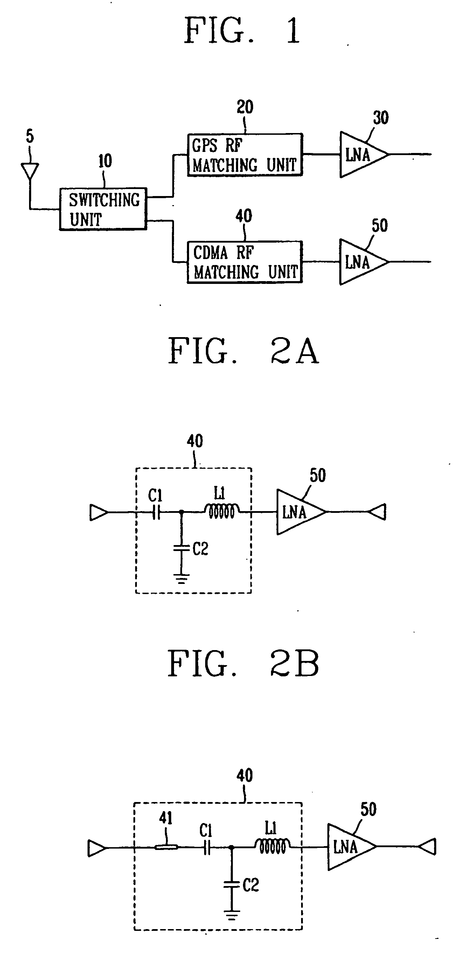

Figure 1 illustrates the construction of an RF receiver of a general mobile communication terminal.

As shown in Figure 1, the RF receiver of the general mobile communication terminal includes an antenna 5 having GPS signal frequency band characteristics and CDMA signal frequency band characteristics; a switching unit 10 for separating a GPS signal and a CDMA signal received from the antenna 5; a GPS RF matching unit 20 for performing an RF matching function of the GPS signal transmitted from the switching unit 10; a first LNA (Low Noise Amplifier) 30 for amplifying the GPS signal outputted from the GPS RF matching unit 20; a CDMA RF matching unit 40 for performing an RF matching function of the CDMA signal transmitted from the switching unit 10; and a second LNA 50 for amplifying the CDMA signal outputted from the CDMA RF matching unit 40.

As shown in Figure 2A, the CDMA RF matching unit 40 can include condensers C1 and C2 and a coil L1.

As shown in Figure 2B, the CDMA RF matching unit 40 can additionally include a PCB line 41 having a certain characteristics impedance value, for example, 50Ω.

The RF receiver of the general mobile communication terminal constructed as described above operates as follows.

When an E911 for a GPS ONE function (position tracking service) is requested by a user, a mobile communication terminal searches satellites for the E911 service while performing a switching between the GPS path and the CDMA path through the switching unit 10.

After the GPS signals including position information and satellite numbers of satellites are received by the antenna 5 of the mobile communication terminal, and then switched to the GPS path by the switching unit 10.

The mobile communication terminal calculates a pseudo-range by using the GPS signals and transmits calculated pseudo-range information and position information of satellites to the position calculating base station (PDE) through the CDMA channel.

The position calculating base station (PDE) calculates a position of the mobile communication terminal by using the pseudo-range information transmitted from the mobile communication terminal and position information of satellites, and informs an emergency rescue agency of the calculated position of the mobile communication terminal.

However, when the E911 service function of the general mobile communication terminal is operated, the RF receiver of the mobile communication terminal uses the both functions of the CDMA mode and the GPS mode in a hybrid form. Thus, if the power strength of a CDMA signal becomes high, the CDMA signal would affect the GPS path, causing problems that a receive sensitivity of the GPS signal is degraded and satellite search performance of the mobile communication terminal deteriorates. Deterioration of the satellite search performance leads to an inaccurate calculation of position of user in an emergency situation.

US 2003/0100333 A1 discloses RF receiving circuitry for a mobile communication terminal capable of GPS and CDMA reception. In the embodiment depicted in figure 1 of this document, the circuitry comprises two RF matching networks connected to a GPS subsystem and a CDMA subsystem, respectively. A switch allows to selectively couple one of the matching networks to a single broadband antenna designed for both GPS and CDMA performance.

EP 1 152 254 A2 discloses a CDMA mobile station incorporating GPS functionality. The mobile station includes separate antennas for CDMA reception and GPS reception. A signal path selector selects which signal, either the CDMA or GPS signal, is applied to a subsequent RF downconverter. A GPS path leading to the signal path selector includes a low noise amplifier interposed between two RF bandselect filters. A CDMA receive path extending to the signal path selector includes another low noise amplifier followed by an RF bandpass filter. In a CDMA mode of the mobile station, the GPS RF section including the GPS low noise amplifier is powered down. During GPS operation, on the other hand, the CDMA section including the CDMA low noise amplifier is powered down.

It is an object of the present invention to provide an RF receiving apparatus and method for a mobile communication terminal capable of minimizing interference by a received CDMA signal affecting GPS performance of the terminal when a position tracking service function is performed, to thereby optimize GPS performance.

To achieve the above object, the present invention provides an RF receiving apparatus according to claim 1 and also an RF receiving method according to claim 12. Preferred embodiments of the invention are given in the dependent sub-claims.

### BRIEF DESCRIPTION OF THE DRAWINGS

The invention will be described in detail with reference to the following drawings in which like reference numerals refer to like elements wherein:
Figure 1 illustrates the construction of an RF receiver of a general mobile communication terminal;
Figure 2A illustrates one example of a general CDMA RF matching unit;
Figure 2B illustrates another example of the general CDMA RF matching unit;
Figure 3 illustrates the construction of an RF receiving apparatus of a mobile communication terminal in accordance with a preferred embodiment of the present invention;
Figure 4 illustrates one example of a CDMA RF matching unit in accordance with the preferred embodiment of the present invention;
Figure 5 illustrates another example of a CDMA RF matching unit in accordance with the preferred embodiment of the present invention; and
Figure 6 is a flow chart of an RF receiving method of a mobile communication terminal in accordance with the preferred embodiment of the present invention.

### DETAILED DESCRIPTION OF THE PREFERRED EMBODIMENTS

A preferred embodiment of the present invention will now be described with reference to the accompanying drawings.

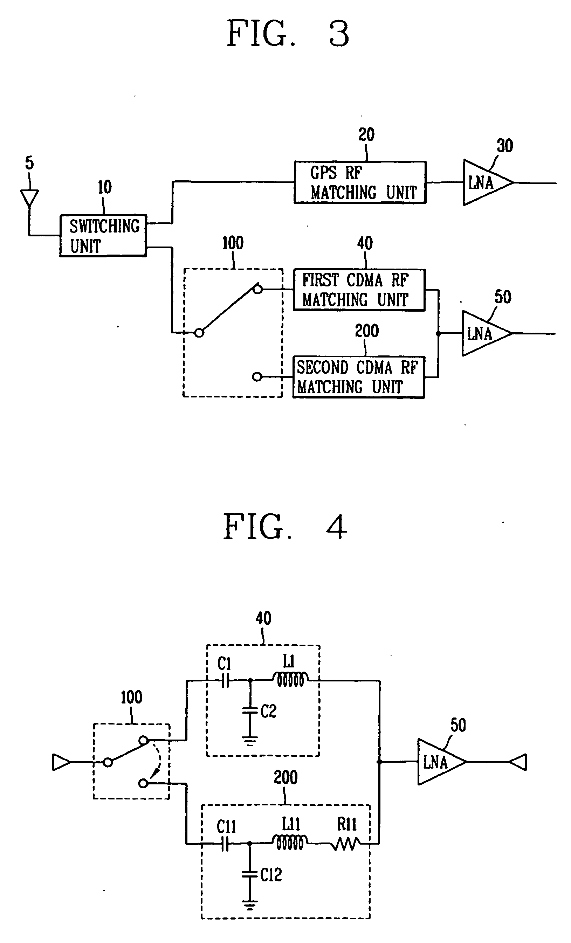

Figure 3 illustrates the construction of an RF receiving apparatus of a mobile communication terminal in accordance with a preferred embodiment of the present invention.

As shown in Figure 3, the RF receiving apparatus of a mobile communication terminal in accordance with the present invention includes: an antenna 5 having a GPS signal frequency band characteristics and CDMA signal frequency band characteristics; a switching unit 10 for separating a GPS signal and a CDMA signal received from the antenna 5 according to an operation mode of the mobile communication terminal; a GPS RF matching unit 20 for performing an RF matching function on the GPS signal transmitted from the switching unit 10; a first LNA (Low Noise Amplifier) 30 for amplifying the GPS signal outputted from the GPS RF matching unit 20; a switch 100 for switching the CDMA signal to one of a first CDMA RF matching unit 40 and a second CDMA RF matching unit 200 according to a power strength of the CDMA signal transmitted from the switching unit 10; the first CDMA RF matching unit 40 for RF-matching the switched CDMA signal without changing its power strength; the second CDMA RF matching unit 200 for RF-matching the switched CDMA signal while reducing its power strength; and a second LNA 50 for amplifying the CDMA signal outputted from one of the first CDMA RF matching unit 40 and the second CDMA RF matching unit 200.

When the operation mode of the mobile communication terminal is changed from a CDMA mode to a GPS mode, a mobile station modem (MSM) of the mobile communication terminal checks a power strength of the CDMA signal received on the RF path and controls a switching operation of the switch 100 according to the power strength of the CDMA signal

As shown in Figure 4, the first CDMA RF matching unit 40 includes a first condenser C1 connected in series to one of two output pins of the switch 100; a first coil L1 connected in series between the first condenser C1 and the second LNA 50; and a second condenser C2 connected between a contact point of the first condenser C1 and the first coil L1 and a ground point.

As shown in Figure 4, the second CDMA RF matching unit 200 includes: a third condenser C11 connected in series to the other output pin of the switch 100; a second coil L11 connected in series to the third condenser C11; a fourth condenser C12 connected between a contact point of the third condenser C1q and the second coil L11 and a ground point; and a resister R11 connected in series between the second coil L11 and the second LNA 50.

The power strength of the CDMA signal is reduced because of the resister R11, the second CDMA RF matching unit 200 performs an RF matching function while reducing the power strength of the CDMA signal. The resister R11 for reducing the power strength of the CDMA signal is designed not to affect the CDMA performance.

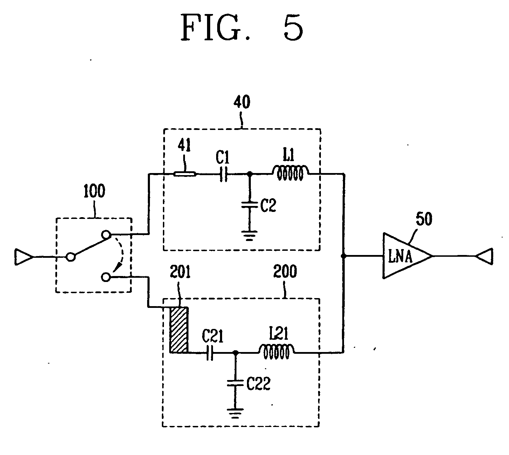

The first CDMA RF matching unit 40 and the second CDMA RF matching unit 200 can be implemented as shown in Figure 5.

With reference to Figure 5, the first CDMA RF matching unit 40 includes: a first PCB line connected in series to one (a first output pin) of two output pins of the switch 100 and having a first characteristics impedance; a first condenser C1 connected in series to the first PCB line 41; a first coil L1 connected in series between the first condenser C1 and the second WA 50; and a second condenser C2 connected between a contact point of the first condenser C1 and the first coil L1 and a ground point.

With reference to Figure 5, the second CDMA RF matching unit 200 includes a second PCB line 201 connected in series to the other output pin (a second output pin) of the switch 100 and having second characteristics impedance; a third condenser C21 connected in series to the second PCB line; a second coil L21 connected in series between the third condenser C21 and the second LNA 50; and a fourth condenser C22 connected between a contact point of the third condenser C1 and the second coil L21 and the ground point.

The first characteristics impedance of the first PCB line 41 is selected as a small value so as not to change the power strength of the CDMA signal, and the second characteristics impedance of the second PCB line 201 is selected as a large value so as to reduce the power strength of the CDMA signal which is greater than a reference power strength. The second PCB line 201 is designed not to affect performance of the CDMA. The reference power strength signifies a power strength at which the power strength of the CDMA signal affect performance of the GPS.

The RF receiving apparatus of a mobile communication terminal constructed as described above operates as follows.

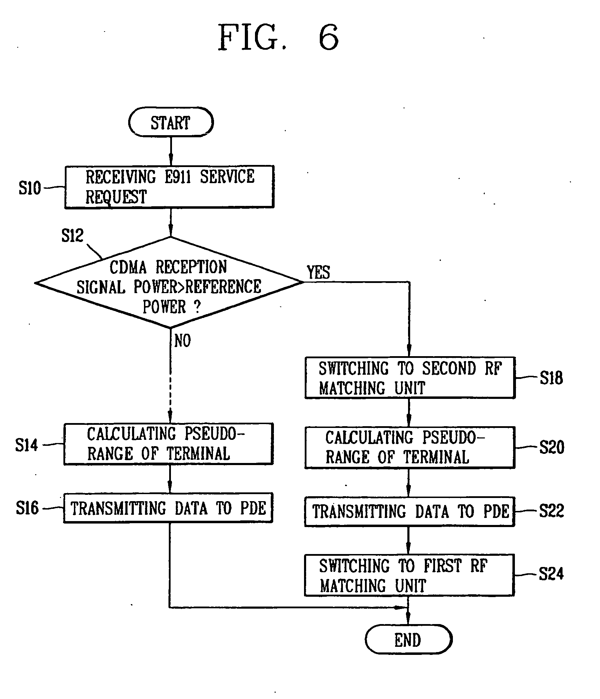

Figure 6 is a flow chart of an RF receiving method of a mobile communication terminal in accordance with the preferred embodiment of the present invention.

In one example of a position tracking service, when an E911 service is requested by a user (step S10), a controller of a mobile communication terminal, namely, the MSM, changes an operation mode from the CDMA mode to the GPS mode and compares a detected power strength of a CDMA signal with a reference power strength (step S12). According to change in the operation mode of the mobile communication terminal, the switching unit 10 switches an RF path from the CDMA path to the GPS path. The detected CDMA signal is a CDMA signal received right before the RF path is switched to the GPS path by the switching unit 10.

If the power strength of the CDMA signal is smaller than the reference power strength, the MSM determines that the power strength of the CDMA reception signal does not interfere/affect the GPS performance and maintains an operation state of the switch 100. Accordingly, the switch 100 maintains the state that the input pin and the first output pin are connected, whereby the first CDMA RF matching unit 40 is maintained in a selected state.

The MSM of the mobile communication terminal calculates a pseudo-range of the mobile communication terminal by using the GPS signal received through the antenna 5, the switching unit 10, the GPS RF matching unit 20 and the first LNA 30 (step S14), and transmits the calculated pseudo-range information of the mobile communication terminal and the received GPS signal to a position calculating base station (PDE) through a CDMA transmission channel (step S16).

If, however, the power strength of the CDMA signal is not smaller than the reference power strength, the MSM determines that the power strength of the CDMA reception signal interferes/affects the GPS performance and controls the switching operation of the switch 100. Accordingly, the switch 100 switches the input pin from the first output pin to the second output pin, so that an output signal of the switching unit 10 can be transmitted to the second CDMA RF matching unit 200 (step S18).

Thus, an RF receiving circuit can receive the GPS signal in a state that interference/influence of the CDMA signal has been minimized, so that a GPS satellite can be more accurately searched.

The MSM of the mobile communication terminal calculates a pseudo-range of the mobile communication terminal by using the GPS signal received through the GPS path in the state that interference/influence of the CDMA signal has been minimized (step S20), and transmits the calculated pseudo-range information of the mobile communication terminal and the received GPS signal to the PDE through the CDMA transmission channel (step S22).

Thereafter, the MSM switches the state of the switch 100 to its original state. The switch 100 switches the input pin to the first output pin, whereby the CDMA path is selected by the first CDMA RF matching unit 40 (step S24). Accordingly, when the CDMA signal having a quite high strength is received, the RF receiving circuit of the mobile communication terminal performs the RF matching function while reducing the power strength of the CDMA signal, whereby interference/influence of the CDMA signal to the GPS sensitivity can be prevented.

As so far described, the RF receiving apparatus and method of a mobile communication terminal have many advantages.

That is, for example, first, when the operation mode of the mobile communication terminal is changed from the CDMA mode to the GPS mode, the power strength of the CDMA reception signal is checked, and if the power strength of the CDMA signal is greater than a reference power strength which interferes/affects GPS performance, an RF matching path for reducing the power strength of the CDMA signal is selected. Therefore, the inference/influence of the CDMA signal to the GPS performance can be minimized.

Second, since the GPS signal is received after minimizing the interference/influence of the CDMA signal, a GPS satellite can be searched under an optimum condition. Accordingly, thanks to enhancement of the performance for searching the GPS satellite, a pseudo-range of a mobile communication terminal can be more accurately calculated.

Third, by transmitting the GPS signal received under the optimum condition of an RF path of the mobile communication terminal and the accurately calculated pseudo-range information to the PDE, the PDE can accurately track a position of the mobile communication based on the information received from the mobile communication terminal.

## Claims

1. An RF receiving apparatus for a mobile communication terminal, comprising:
- a switching unit (10) for switching an RF antenna path to one of a CDMA signal path and a GPS signal path under control of a controller;
- a GPS RF matching unit (20) in the GPS signal path and a first low noise amplifier (30) for amplifying an RF-matched GPS signal outputted from the GPS RF matching unit (20);
- COMA RF matching means (40, 200) in the CDMA signal path and a second low noise amplifier (50) for amplifying an RF-matched CDMA signal outputted from the CDMA RF matching means (40, 200);
**characterized in that** the CDMA RF matching means (40, 200) comprise a first CDMA RF matching unit (40) for RF-matching a CDMA signal received via the RF antenna path without changing a power strength of the received CDMA signal and a second CDMA RF matching unit (200) for RF-matching the received CDMA signal while reducing the power strength thereof to a prescribed level; that the RF receiving apparatus further comprises a switch (100) for switching the received CDMA signal to one of the first and second CDMA RF matching units (40, 200); and that the controller checks the power strength of the received CDMA signal and controls switching of the switch (100) according to the power strength of the CDMA signal, when a position tracking service is requested.

2. The apparatus of claim 1, wherein the controller compares the power strength of the received CDMA signal and a reference power strength, and if the power strength of the received CDMA signal is not smaller than the reference power strength, the controller outputs a first switching control signal for switching the received COMA signal to the second CDMA RF matching unit (200), to the switch (100).

3. The apparatus of claim 2, wherein the reference power strength is set as a level at which the received CDMA signal interferes/affects the GPS RF reception performance.

4. The apparatus of claim 2, wherein when the second CDMA RF matching unit (200) is selected by the switch (100), the controller outputs a second switching control signal for selecting the first CDMA RF matching unit (40), to the switch (100), if a pseudo-range of the mobile communication terminal is calculated by using a received GPS signal.

5. The apparatus of claim 2, wherein if the power strength of the received CDMA signal is smaller than the reference power strength, the controller outputs a third switching control signal for switching the received CDMA signal to the first CDMA RF matching unit (40), to the switch (100).

6. The apparatus of claim 1, wherein the first CDMA RF matching unit (40) comprises:
- a first condenser (C1) connected in series to a first output pin of the switch (100);
- a first coil (L1) connected in series between the first condenser (C1) and the second low noise amplifier (50); and
- a second condenser (C2) connected between a contact point of the first condenser (C1) and the first coil (L1) and a ground point.

7. The apparatus of claim 6, wherein the second CDMA RF matching unit (200) comprises:
- a third condenser (C11) connected in series to a second output pin of the switch (100);
- a second coil (L11) connected in series to the third condenser (C11);
- a fourth condenser (C12) connected in series between a contact point of the third condenser (C11) and the second coil (L11) and a ground point; and
- a resistor (R11) connected in series between the second coil (L11) and the second low noise amplifier (50).

8. The apparatus of claim 1, wherein the first CDMA RF matching unit (40) comprises:
- a first PCB line (41) connected in series to a first output pin of the switch (100) and having a first characteristic impedance;
- a first condenser (C1) connected in series to the first PCB line (41);
- a first coil (L1) connected in series between the first condenser (C1) and the second-low noise amplifier (50); and
- a second condenser (C2) connected between a contact point of the first condenser (C1) and the first coil (L1) and a ground point.

9. The apparatus of claim 8, wherein the second CDMA RF matching unit (200) comprises:
- a second PCB line (201) connected in series to a second output pin of the switch (100) and having a second characteristic impedance;
- a third condenser (C21) connected in series to the second PCB line (201);
- a second coil (L21) connected in series between the third condenser (C21) and the second low noise amplifier (50); and
- a fourth condenser (C22) connected between a contact point of the third condenser (C21) and the second coil (L21) and the ground point.

10. The apparatus of claim 9, wherein the second characteristic impedance is greater than the first characteristic impedance.

11. A mobile communication terminal comprising an RF receiving apparatus of one of claims 1 to 10.

12. An RF receiving method for a mobile communication terminal, comprising:
- controlling switching of an RF antenna path to one of a CDMA signal path and a GPS signal path depending on a request for a position tracking service;
**characterized by**:
- checking (S12) a power strength of a CDMA signal received via the RF antenna path when a position tracking service is requested;
- maintaining a first CDMA signal sub-path as an RF matching path for the received CDMA signal if the received CDMA signal is determined not to interfere with GPS RF reception performance; and
- switching (S18) the RF matching path for the received CDMA signals to a second CDMA signal sub-path if the received CDMA signal is determined to interfere with GPS RF reception performance.

13. The method of claim 12, wherein the second CDMA signal sub-path is an RF matching path for performing RF-matching while reducing the power strength of the received CDMA signal to a prescribed level.

14. The method of claim 12, wherein the second CDMA signal sub-path includes a PCB line (201) having a greater characteristic impedance than a PCB line (41) included in the first CDMA signal sub-path.

15. The method of claim 12, wherein the first CDMA signal sub-path is an RF matching path for performing RF-matching without changing the power strength of the received CDMA signal.

16. The method of claim 12, further comprising:
- receiving GPS satellite information through the GPS signal path in a state of minimized interference of the received CDMA signal with GPS RF reception performance;
- calculating (S20) a pseudo-range of the mobile communication terminal using the GPS satellite information; and
- transmitting (S22) the pseudo-range and the GPS satellite information from the mobile communication terminal to a position calculating base station.

17. The method of claim 16, further comprising:
- switching (S24) the RF matching path for the received CDMA signal to the first CDMA signal sub-path.

## Patentansprüche

1. HF-Empfangsvorrichtung für ein mobiles Kommunikationsendgerät, umfassend:
- eine Schalteinheit (10) zum Schalten eines HF-Antennenpfads auf einen CDMA-Signalpfad oder einen GPS-Signalpfad unter der Steuerung einer Steuereinheit,
- eine GPS-HF-Anpasseinheit (20) in dem GPS-Signalpfad sowie einen ersten rauscharmen Verstärker (30) zur Verstärkung eines von der GPS-HF-Anpasseinheit (20) ausgegebenen, HF-angepassten GPS-Signals,
- CDMA-HF-Anpassmittel (40, 200) in dem CDMA-Signalpfad sowie einen zweiten rauscharmen Verstärker (50) zur Verstärkung eines von den CDMA-HF-Anpassmitteln (40, 200) ausgegebenen, HF-angepassten CDMA-Signals,
**dadurch gekennzeichnet, dass** die CDMA-HF-Anpassmittel (40, 200) eine erste CDMA-HF-Anpasseinheit (40) zur HF-Anpassung eines über den HF-Antennenpfad empfangenen CDMA-Signals ohne Änderung der Leistungshöhe des empfangenen CDMA-Signals sowie eine zweite CDMA-HF-Anpasseinheit (200) zur HF-Anpassung des empfangenen CDMA-Signals mit Verringerung der Leistungshöhe desselben auf einen vorgeschriebenen Wert umfassen, dass die HF-Empfangsvorrichtung ferner einen Schalter (100) zum Schalten des empfangenen CDMA-Signals auf die erste oder die zweite CDMA-HF-Anpasseinheit (40, 200) umfasst und dass die Steuereinheit die Leistungshöhe des empfangenen CDMA-Signals prüft und die Schalttätigkeit des Schalters (100) abhängig von der Leistungshöhe des CDMA-Signals steuert, wenn ein Positionsverfolgungsdienst angefordert ist.

2. Vorrichtung nach Anspruch 1, wobei die Steuereinheit die Leistungshöhe des empfangenen CDMA-Signals mit einer Referenzleistungshöhe vergleicht, wobei dann, wenn die Leistungshöhe des empfangenen CDMA-Signals nicht kleiner als die Referenzleistungshöhe ist, die Steuereinheit ein erstes Schaltsteuersignal an den Schalter (100) ausgibt, um das empfangene CDMA-Signal auf die zweite CDMA-HF-Anpasseinheit (200) zu schalten.

3. Vorrichtung nach Anspruch 2, wobei die Referenzleistungshöhe auf einen Wert eingestellt ist, bei dem das empfangene CDMA-Signal das GPS-HF-Empfangsverhalten stört/beeinträchtigt.

4. Vorrichtung nach Anspruch 2, wobei dann, wenn die zweite CDMA-HF-Anpasseinheit (200) durch den Schalter (100) ausgewählt ist, die Steuereinheit ein zweites Schaltsteuersignal an den Schalter (100) ausgibt, um die erste CDMA-HF-Anpasseinheit (40) auszuwählen, falls ein Pseudobereich des mobilen Kommunikationsendgeräts mittels eines empfangenen GPS-Signals berechnet wird.

5. Vorrichtung nach Anspruch 2, wobei dann, wenn die Leistungshöhe des empfangenen CDMA-Signals kleiner als die Referenzleistungshöhe ist, die Steuereinheit ein drittes Schaltsteuersignal an den Schalter (100) ausgibt, um das empfangene CDMA-Signal auf die erste CDMA-HF-Anpasseinheit (40) zu schalten.

6. Vorrichtung nach Anspruch 1, wobei die erste CDMA-HF-Anpasseinheit (40) umfasst:
- einen ersten Kondensator (C1), welcher in Reihe mit einem ersten Ausgangsstift des Schalters (100) geschaltet ist,
- eine erste Spule (L1), welche in Reihe zwischen den ersten Kondensator (C1) und den zweiten rauscharmen Verstärker (50) geschaltet ist, sowie
- einen zweiten Kondensator (C2), welcher zwischen einen Kontaktpunkt des ersten Kondensators (C1) und der ersten Spule (L1) und einen Massepunkt geschaltet ist.

7. Vorrichtung nach Anspruch 6, wobei die zweite CDMA-HF-Anpasseinheit (200) umfasst:
- einen dritten Kondensator (C11), welcher in Reihe zu einem zweiten Ausgangsstift des Schalters (100) geschaltet ist,
- eine zweite Spule (L11), welche in Reihe zu dem dritten Kondensator (C11) geschaltet ist,
- einen vierten Kondensator (C12), welcher in Reihe zwischen einen Kontaktpunkt des dritten Kondensators (C11) und der zweiten Spule (L11) und einen Massepunkt geschaltet ist, sowie
- einen Widerstand (R11), welcher in Reihe zwischen die zweite Spule (L11) und den zweiten rauscharmen Verstärker (50) geschaltet ist.

8. Vorrichtung nach Anspruch 1, wobei die erste CDMA-HF-Anpasseinheit (40) umfasst:
- eine erste PCB-Leitung (41), welche in Reihe mit einem ersten Ausgangsstift des Schalters (100) geschaltet ist und eine erste charakteristische Impedanz besitzt,
- einen ersten Kondensator (C1), welcher in Reihe mit der ersten PCB-Leitung (41) geschaltet ist,
- eine erste Spule (L1), welche in Reihe zwischen den ersten Kondensator (C1) und den zweiten rauscharmen Verstärker (50) geschaltet ist, sowie
- einen zweiten Kondensator (C2), welcher zwischen einen Kontaktpunkt des ersten Kondensators (C1) und der ersten Spule (L1) und einen Massepunkt geschaltet ist.

9. Vorrichtung nach Anspruch 8, wobei die zweite CDMA-HF-Anpasseinheit (200) umfasst:
- eine zweite PCB-Leitung (201), welche in Reihe mit einem zweiten Ausgangsstift des Schalters (100) verbunden ist und eine zweite charakteristische Impedanz besitzt,
- einen dritten Kondensator (C21), welcher in Reihe mit der zweiten PCB-Leitung (201) geschaltet ist,
- eine zweite Spule (L21), welche in Reihe zwischen den dritten Kondensator (C21) und den zweiten rauscharmen Verstärker (50) geschaltet ist, sowie
- einen vierten Kondensator (C22), welcher zwischen einen Kontaktpunkt des dritten Kondensators (C21) und der zweiten Spule (L21) und den Massepunkt geschaltet ist.

10. Vorrichtung nach Anspruch 9, wobei die zweite charakteristische Impedanz größer als die erste charakteristische Impedanz ist.

11. Mobiles Kommunikationsendgerät mit einer HF-Empfangsvorrichtung nach einem der Ansprüche 1 bis 10.

12. HF-Empfangsverfahren für ein mobiles Kommunikationsendgerät, umfassend:
- Steuern des Schaltens eines HF-Antennenpfads auf einen CDMA-Signalpfad oder einen GPS-Signalpfad abhängig von einer Anforderung eines Positionsverfolgungsdiensts,
**gekennzeichnet durch**:
- Prüfen (S12) einer Leistungshöhe eines über den HF-Antennenpfad empfangenen CDMA-Signals, wenn ein Positionsverfolgungsdienst angefordert ist,
- Beibehalten eines ersten CDMA-Signalunterpfads als HF-Anpasspfad für das empfangene CDMA-Signal, wenn für das empfangene CDMA-Signal festgestellt wird, dass es das GPS-HF-Empfangsverhalten nicht stört, und
- Umschalten (S18) des HF-Anpasspfads für das empfangene CDMA-Signal auf einen zweiten CDMA-Signalunterpfad, wenn für das empfangene CDMA-Signal festgestellt wird, dass es das GPS-HF-Empfangsverhalten stört.

13. Verfahren nach Anspruch 12, wobei der zweite CDMA-Signalunterpfad ein HF-Anpasspfad zur Durchführung einer HF-Anpassung mit Verringerung der Leistungshöhe des empfangenen CDMA-Signals auf einen vorgeschriebenen Wert ist.

14. Verfahren nach Anspruch 12, wobei der zweite CDMA-Signalunterpfad eine PCB-Leitung (201) mit einer größeren charakteristischen Impedanz als eine in dem ersten CDMA-Signalunterpfad liegende PCB-Leitung (41) umfasst.

15. Verfahren nach Anspruch 12, wobei der erste CDMA-Signalunterpfad ein HF-Anpasspfad zur Durchführung einer HF-Anpassung ohne Änderung der Leistungshöhe des empfangenen CDMA-Signals ist.

16. Verfahren nach Anspruch 12, ferner umfassend:
- Empfangen von GPS-Satelliteninformationen über den GPS-Signalpfad in einem Zustand minimaler Störung des GPS-HF-Empfangsverhaltens durch das empfangene CDMA-Signal,
- Berechnen (S20) eines Pseudobereichs des mobilen Kommunikationsendgeräts unter Verwendung der GPS-Satelliteninformationen sowie
- Übermitteln (S22) des Pseudobereichs und der GPS-Satelliteninformationen von dem mobilen Kommunikationsendgerät an eine positionsberechnende Basisstation.

17. Verfahren nach Anspruch 16, ferner umfassend:
- Umschalten (S24) des HF-Anpasspfads für das empfangene CDMA-Signal auf den ersten CDMA-Signalunterpfad.

## Revendications

1. Appareil de réception radio d'un terminal de communication mobile, comprenant :
- un équipement de commutation (10) permettant de commuter un trajet d'antenne radio vers un trajet de signal AMRC ou un trajet de signal GPS sous le contrôle d'un contrôleur ;
- un dispositif d'adaptation radio GPS (20) dans le trajet de signal GPS et un premier amplificateur à faible bruit (30) permettant d'amplifier un signal GPS adapté aux radiofréquences émis par le dispositif d'adaptation radio GPS (20) ;
- un moyen d'adaptation radio AMRC (40, 200) dans le trajet de signal AMRC et un second amplificateur à faible bruit (50) permettant d'amplifier un signal AMRC adapté aux radiofréquences émis par le moyen d'adaptation radio AMRC (40, 200) ; **caractérisé en ce que** le moyen d'adaptation radio AMRC (40, 200) comprend un premier dispositif d'adaptation radio AMRC (40) permettant l'adaptation radio d'un signal AMRC reçu via le trajet d'antenne radio sans modifier la puissance du signal AMRC reçu et un second dispositif d'adaptation radio AMRC (200) permettant l'adaptation radio du signal AMRC reçu tout en réduisant sa puissance à un niveau prescrit ; **en ce que** l'appareil de réception radio comprend en outre un commutateur (100) permettant de commuter le signal AMRC reçu vers l'un des premier et second dispositifs d'adaptation radio AMRC (40, 200) ; et **en ce que** le contrôleur vérifie la puissance du signal AMRC reçu et contrôle la commutation du commutateur (100) en fonction de la puissance du signal AMRC, lorsqu'un service de poursuite de position est interrogé.

2. Appareil selon la revendication 1, dans lequel le contrôleur compare la puissance du signal AMRC reçu et une puissance de référence, et si la puissance du signal AMRC reçu n'est pas inférieure à la puissance de référence, le contrôleur émet un premier signal de commande de commutation, permettant de commuter le signal AMRC reçu vers le second dispositif d'adaptation radio AMRC (200), vers le commutateur (100).

3. Appareil selon la revendication 2, dans lequel la puissance de référence est définie comme un niveau auquel le signal AMRC reçu interfère avec/affecte les performances de réception radio GPS.

4. Appareil selon la revendication 2, dans lequel le second dispositif d'adaptation radio AMRC (200) est sélectionné par le commutateur (100), le contrôleur émet un deuxième signal de contrôle de commutation, permettant de sélectionner le premier dispositif d'adaptation radio AMRC (40), vers le commutateur (100), si une pseudo-distance du terminal de communication mobile est calculée à l'aide d'un signal GPS reçu.

5. Appareil selon la revendication 2, dans lequel, si la puissance du signal AMRC reçu est inférieure à la puissance de référence, le contrôleur émet un troisième signal de contrôle de commutation, permettant de commuter le signal AMRC reçu vers le premier dispositif d'adaptation radio AMRC (40), vers le commutateur (100).

6. Appareil selon la revendication 1, dans lequel le premier dispositif d'adaptation radio AMRC (40) comprend :
- un premier condensateur (C1) connecté en série à une première broche de sortie du commutateur (100) ;
- une première bobine (L1) connectée en série entre le premier condensateur (C1) et le second amplificateur à faible bruit (50) ; et
- un deuxième condensateur (C2) connecté entre un point de contact du premier condensateur (C1) et de la première bobine (L1) et un point de masse.

7. Appareil selon la revendication 6, dans lequel le second dispositif d'adaptation radio AMRC (200), comprend :
- un troisième condensateur (C11) connecté en série à une seconde broche de sortie du commutateur (100) ;
- une seconde bobine (L11) connectée en série au troisième condensateur (C11) ; et
- un quatrième condensateur (C12) connecté en série entre un point de contact du troisième condensateur (C11) et de la seconde bobine (L11) et un point de masse ; et
- une résistance (R11) connectée en série entre la seconde bobine (L11) et le second amplificateur à faible bruit (50).

8. Appareil selon la revendication 1, dans lequel le premier dispositif d'adaptation radio AMRC (40), comprend :
- une première ligne de carte de circuit imprimé (41) connectée en série à une première broche de sortie du commutateur (100) et présentant une première impédance caractéristique ;
- un premier condensateur (C1) connecté en série à la première ligne de carte de circuit imprimé (41) ;
- une première bobine (L1) connectée en série entre le premier condensateur (C1) et le second amplificateur à faible bruit (50) ; et
- un deuxième condensateur (C2) connecté entre un point de contact du premier condensateur (C1) et de la première bobine (L1) et un point de masse.

9. Appareil selon la revendication 8, dans lequel le second dispositif d'adaptation radio AMRC (200), comprend :
- une seconde ligne de carte de circuit imprimé (201) connectée en série à une seconde broche de sortie du commutateur (100) et présentant une seconde impédance caractéristique ;
- un troisième condensateur (C21) connecté en série à la seconde ligne de carte de circuit imprimé (201) ;
- une seconde bobine (L21) connectée en série entre le troisième condensateur (C21) et le second amplificateur à faible bruit (50) ; et
- un quatrième condensateur (C22) connecté entre un point de contact du troisième condensateur (C21) et de la seconde bobine (L21) et le point de masse.

10. Appareil selon la revendication 9, dans lequel la seconde impédance caractéristique est supérieure à la première impédance caractéristique.

11. Terminal de communication mobile comprenant un appareil de réception radio de l'une des revendications 1 à 10.

12. Procédé de réception radio d'un terminal de communication mobile, comprenant :
- le contrôle de la commutation d'un trajet d'antenne radio vers un trajet de signal AMRC ou un trajet de signal GPS en fonction de l'interrogation d'un service de poursuite de position ;
**caractérisé par** :
- la vérification (S12) d'une puissance d'un signal AMRC reçu via le trajet d'antenne radio lorsqu'un service de poursuite de position est interrogé ;
- le maintien d'un premier sous-trajet de signal AMRC en tant que trajet d'adaptation radio pour le signal AMRC reçu si le signal AMRC reçu est déterminé comme n'interférant pas avec les performances de réception radio GPS ; et
- la commutation (S18) du trajet d'adaptation radio pour le signal AMRC reçu vers un second sous-trajet de signal AMRC si le signal AMRC reçu est déterminé comme interférant avec les performances de réception radio GPS.

13. Procédé selon la revendication 12, dans lequel le second sous-trajet de signal AMRC est un trajet d'adaptation radio permettant de réaliser l'adaptation radio tout en réduisant la puissance du signal AMRC reçu à un niveau prescrit.

14. Procédé selon la revendication 12, dans lequel le second sous-trajet de signal AMRC inclut une ligne de carte de circuit imprimé (201) présentant un impédance caractéristique supérieure à celle d'une ligne de carte de circuit imprimé (41) incluse dans le premier sous-trajet de signal AMRC.

15. Procédé selon la revendication 12, dans lequel le premier sous-trajet de signal AMRC est un trajet d'adaptation radio permettant de réaliser l'adaptation radio sans modifier la puissance du signal AMRC reçu.

16. Procédé selon la revendication 12, comprenant en outre :
- la réception d'informations satellitaires GPS via le trajet de signal GPS dans un état d'interférences réduites le plus possible du signal AMRC reçu avec des performances de réception radio GPS ;
- le calcul (S20) d'une pseudo-distance du terminal de communication mobile à l'aide d'informations satellitaires GPS ; et
- la transmission (S22) de la pseudo-distance et des informations satellitaires GPS provenant du terminal de communication mobile vers une station de base de calcul de positions.

17. Procédé selon la revendication 16, comprenant en outre :
- la commutation (S24) du trajet d'adaptation radio pour le signal AMRC reçu vers le premier sous-trajet de signal AMRC.
